# EUROPÄISCHE PATENTSCHRIFT

(11) **EP 1 359 005 B1**
(45) Veröffentlichungstag und Bekanntmachung des Hinweises auf die Patenterteilung: **25.01.2006**
(21) Anmeldenummer: 03009120.1
(22) Anmeldetag: 22.04.2003
(51) Int. Cl.: B32B 7/04

(54) **Sandwichelemente und ihre Verwendung**
Sandwich elements and their use
Eléments sandwich et leur utilisation

(30) Priorität: 02.05.2002 DE 10219711
(43) Veröffentlichungstag der Anmeldung: 05.11.2003
(73) Patentinhaber: Bayer MaterialScience AG, 51368 Leverkusen (DE)
(72) Erfinder: Franken, Klaus, Dr., 51467 Bergisch Gladbach (DE); Paul, Reiner, Dr., 42799 Leichlingen (DE)

(56) Entgegenhaltungen:
- EP-A- 0 525 509
- WO-A-01/70445
- US-A- 3 909 582
- US-A- 6 013 730

## Beschreibung

Die Erfindung betrifft Sandwichelemente mit Sollbruchstellen, an denen das Sandwichelement bei einem Aufprall bricht, sowie ihre Verwendung im Automobilbereich.

Sandwichelemente können z.B. im Automobilbereich als Dach-, Motorhauben-, Heckklappen-, Tür- oder Bodenplattenmodule sowie als Ladeböden, Hutablagen oder Innenverkleidungsteile eingesetzt werden. Von Vorteil ist hierbei ihre hohe Biegesteifigkeit bei gleichzeitig niedrigem Flächengewicht im Vergleich zu massiv ausgeführten Bauelementen. Insbesondere Bauelemente die sich vorwiegend in einer Ebene erstrecken, zeigen bei Belastung in der Ebene hohe Steifigkeiten und Festigkeiten. Bei manchen Bauteilen sind diese hohen Festigkeiten in der Ebene allerdings von Nachteil.

Zum Beispiel kann es bei Ladeböden von Automobilen beim Heckcrash vorkommen, dass die Ladeböden nicht brechen, sondern die Crashenergie an den Fahrgastraum bzw. die Insassen weiterleiten. Dies birgt ein hohes Gefährdungspotential.

Die derzeit im Markt befindlichen Ladeböden werden daher, falls erforderlich, mit Kerben oder Schlitzen versehen. Solche Sollbruchstellen schwächen die Ladeböden beim Unfall. Die Ladeböden verlieren dabei allerdings auch immer einen Großteil ihrer Biegesteifigkeit und -festigkeit und verringern die Gebrauchslast.

Ausfiihrungen mit Gelenken (Scharniere) in den Ladeböden, an denen bei einem Crash der Ladeboden zusammenklappt, sind möglich, technisch aber sehr aufwendig.

Es gibt auch geteilte Ladeböden. Dabei ist nachteilig, dass bei ungünstigen Lastverhältnissen die gesamte Last auf nur einem Teilsegment liegt. Dies erfordert eine zusätzliche hohe Biegesteifigkeit der Einzelsegmente.

Des Weiteren kann durch spezielle konstruktive Lagerungselemente erreicht werden, dass sich die Ladeböden beim Unfall in eine ungefährliche Lage drehen. Solche sehr aufwendigen Maßnahmen sind aber nicht bei jedem Fahrzeug realisierbar.

Aufgabe war es daher, Konstruktionselemente zur Verfügung zu stellen, die zum einen ein niedriges Gewicht und zum anderen eine hohe Biegesteifigkeit und -festigkeit aufweisen und die außerdem bei einem Unfall (Crash, insbesondere Heckcrash) die Crash-Energie nicht in die Fahrgastzelle übertragen und damit die Insassen gefährden.

Diese Aufgabe konnte durch die Einführung einer Sollbruchstelle in ein Sandwichelement gelöst werden, wobei bei einem Auffahrunfall das Sandwichelement an der Sollbruchstelle bricht, so dass die Crash-Energie nicht übertragen wird (reduzierte Festigkeit des Sandwichelementes in der Ebene), wohingegen die Biegefestigkeit und -steifigkeit unter Gebrauchslast unverändert bleibt.

Gegenstand der Erfindung ist ein Sandwichelement mit mindestens einer Sollbruchstelle bestehend aus
a) einer Kernschicht aufgebaut aus mindestens einer Papierwabe und
b) zwei außenliegenden, fest mit der Kernschicht verbundenen Außenschichten, die jeweils aus mit Polyurethan getränkten Glasfasermatten aufgebaut sind,
c) gegebenenfalls Klebeschichten zwischen Kernschicht und außenliegenden Schichten,

dadurch gekennzeichnet, dass auf der Zugseite des Sandwichelementes mindestens ein Delaminierungsmittel aus der Gruppe bestehend aus Papier, Pappe, Kunststoff- und Blechfolien, gegebenenfalls mit einseitig Klebenden Schichten versehen, mindestens über einem Teil der Fläche des Sandwichelementes angeordnet ist und das Delaminierungsmittel zwischen der auf der Zugseite befindlichen außenliegenden Schicht und der Kernschicht oder im ersten äußeren Drittel der Kernschicht auf der Zugseite des Sandwichelementes liegt.

Die Zugseite ist diejenige Seite des Sandwichelementes, die bei einer Biegebeanspruchung durch Zugspannungen beansprucht wird.

Für die außenliegenden Schichten kommen mit Polyurethanharz beaufschlagte Glasfasermatten zum Einsatz.

Die Kernschicht ist aufgebaut aus mindestens einer Papier wabe.

Als Delaminierungsmittel können zwischen den außenliegenden Schichten und der Kernschicht entkoppelnd (die Haftung zwischen Außenschicht und Kernschicht lockernd oder die Kernschicht auf der Zugseite schwächend) wirkende Mittel, die bei der Herstellung der Sandwichelemente in situ eingebracht werden, verwendet werden. Geeignet sind Papier, Pappe, Kunststoff- oder Blechfolien die ggf., einseitig mit klebenden Schichten versehen sind.

Die erfindungsgemäßen Sandwichelemente werden im Automobilbereich als Dachmodule, Motorhauben, Heckklappemnodule, Türmodule oder Bodenplattenmodule, insbesondere als Ladeböden, Hutablagen oder Innenverkleidungsteile verwendet.

Die Biegefestigkeit ist die Grenze der Biegebeanspruchung, bei deren Überschreitung das Bauelement versagt.

Die Biegesteifigkeit ist der Widerstand eines Bauelementes gegen Durchbiegung.

Die Erfindung soll anhand der nachfolgenden Beispiele näher erläutert werden.

### Beispiele

In Vergleichsbeispiel 1 wurde ein Druckversuch in der Plattenebene (Crashrichtung) an Proben ohne Sollbruchstelle und in Beispiel 2 an Proben mit erfindungsgemäßen Sollbruchstellen durchgeführt. In Vergleichsbeispiel 3 wurde die Biegesteifigkeit und -festigkeit an Proben ohne Sollbruchstelle und in Beispiel 4 an Proben mit erfindungsgemäßer Sollbruchstelle bestimmt. Beispiele 5 und 6 zeigen anhand von Druckversuchen, wie durch Modifikation von Art und Geometrie der erfindungsgemäßen Sollbruchstelle das Bruchverhalten gesteuert werden kann.

### Ausgangsmaterialien:

| | |
|---|---|
| Polyol 1: | Polyetherpolyol der OH-Zahl 865, hergestellt durch Addition von Propylenoxid an Trimethylolpropan als Starter. |
| Polyol 2: | Polyetherpolyol der OH-Zahl 1000, hergestellt durch Addition von Propylenoxid an Trimethylolpropan als Starter. |
| Polyol 3: | Polyetherpolyol der OH-Zahl 42, hergestellt durch Addition von 86 % Propylenoxid und 14 % Ethylenoxid an Propylenglykol als Starter. |
| Polyisocyanat: | Polymeres MDI mit einem Isocyanatgehalt von 31,5 Gew.-% (Desmodur® 44V20L, Bayer AG). |
| Stabilisator: | Siliconstabilisator Polyurax® SR242, Osi Crompton Witco Specialities, Frankfurt. |
| Katalysator: | Aminkatalysator Thancat® AN 10, Air Products GmbH, Hattingen. |
| Farbstoff: | Baydur® Schwarzpaste DN, Bayer AG, Leverkusen. |

### Polyurethan-Rezeptur 1:

| | |
|---|---|
| Polyol 1 | 30 Gew.-Teile |
| Polyol 2 | 20 Gew.-Teile |
| Polyol 3 | 33 Gew.-Teile |
| Katalysator | 2,8 Gew.-Teile |
| Stabilisator | 1,3 Gew.-Teile |
| Essigsäure | 0,3 Gew.-Teile |
| Farbstoff | 3,3 Gew.-Teile |
| Polyisocyanat | 140 Gew.-Teile |

Das Polyolgemisch aus den Polyolen 1 bis 3 hat eine durchschnittliche OH-Zahl von 568 mg KOH/g.

### Vergleichsbeispiel 1 (Druckversuch an Proben ohne Sollbruchstelle)

Auf eine ebene Kernschicht aus einer Papierwabe des Typs Wellpappe 5/5 mit einer Dicke von 20 mm und einem Flächengewicht von 1600 g/m² wurden beidseitig Schnittglasfasermatten mit einem Flächengewicht von 450 g/m² aufgelegt, die bei Raumtemperatur durch Aufsprühen von 450 g/m² Polyurethan-Rezeptur 1 beaufschlagt wurden. Dieses Sandwichelement wurde in ein auf 130°C beheiztes, ebenes Werkzeug eingebracht und anschließend auf 19,4 mm Dicke verpresst. Nach einer Presszeit von 180 s wurde das Werkzeug geöffnet und das fertige Sandwichelement entnommen. Die Größe dieses Sandwichelementes betrug ca. 1000 mm x 1000 mm.

Aus dem so hergestellten Sandwichelement wurden 3 rechteckige Proben der Größe 400 mm x 180 mm (Länge x Breite) herausgesägt, wobei die längere Probenkante quer zum Verlauf der Papierwellen der Kernschicht war. Diese Proben wurden in einer Universal Zug/Druck-Prüfmaschine einachsig über die Stirnseiten mit einer Geschwindigkeit von 5 mm/min auf Druck beansprucht. Die Druckbeanspruchung wirkte somit in der Plattenebene in Richtung der längeren Probendimension. Die zum Versagen der Proben führenden Kräfte betrugen 14173 N, 14093 N und 15928 N (Mittelwert: 14 731 N).

### Beispiel 2 (Druckversuch an Proben mit Sollbruchstelle)

Es wurde auf eine wie oben beschriebene Kernschicht ein Delaminierungsmittel, bestehend aus einem einseitig mit Klebstoff beschichteten Aluminiumstreifen der Firma Beiersdorf AG, Marke tesa®, Bezeichnung tesametal 4500 aufgebracht. Das Delaminierungsmittel wurde auf eine Breite von 15 mm und eine Länge von 1000 mm zugeschnitten und wurde parallel zu dem Verlauf der Papierwellen in der Mitte der Kernschicht auf eine Seite aufgeklebt. Anschließend wurden beidseitig Schnittglasfasermatten mit einem Flächengewicht von 450 g/m² aufgelegt, die bei Raumtemperatur durch Aufsprühen von 450 g/m² Polyurethan-Rezeptur 1 beaufschlagt wurden. Dieses Sandwichelement wurde in ein auf 130°C beheiztes, ebenes Werkzeug eingebracht und anschließend auf 19,4 mm Dicke verpresst. Nach einer Presszeit von 180 s wurde das Werkzeug geöffnet und das fertige Sandwichelement entnommen. Die Größe dieses Sandwichelementes betrug ca. 1000 mm x 1000 mm. Anschließend wurden 3 rechteckige Proben der Größe 400 mm x 180 mm aus der Platte herausgesägt, wobei die längere Probenkante quer zum Verlauf der Papierwellen der Kernschicht war. Die Proben wurden so herausgesägt, dass sich das Delaminierungsmittel in der Mitte der Proben befand. Bis auf das Delaminierungsmittel waren diese Proben identisch mit denen aus Vergleichsbeispiel 1 hergestellt.

Die Druckprüfung erfolgte analog zu Vergleichsbeispiel 1. Die zum Versagen der Proben führenden Kräfte (Bruchlasten) betrugen 5622 N, 5106 N und 5777 N (Mittelwert: 5502 N).

Durch die Sollbruchstelle in Beispiel 2 wurde der Mittelwert der Bruchlast gegenüber Sandwichelementen ohne Sollbruchstelle (Vergleichsbeispiel 1) auf 37 % reduziert.

### Vergleichsbeispiel 3 (Biegeversuch an Proben ohne Sollbruchstelle)

Aus dem in Vergleichsbeispiel 1 beschriebenen Sandwichelement wurden 5 Proben mit einer jeweiligen Länge von 240 mm und einer Breite von 60 mm entnommen. Die Orientierung der Wellenwabe war quer zur Probenlänge. Der Biegeversuch wurde gemäß DIN 53293 durchgeführt. Als effektive Biegesteifigkeiten wurden 80,6·10⁶ Nmm², 82,1·10⁶ Nmm², 72,1·10⁶ Nmm², 75,4·10⁶ Nmm² und 77,5·10⁶ Nmm² (Mittelwert 77,5·10⁶ Nmm²) ermittelt. Die Kräfte bei Versagen betrugen 853,6 N, 826,4 N, 828,7 N, 845,4 N und 820,6 N (Mittelwert 834,9 N).

### Beispiel 4 (Biegeversuch an Proben mit Sollbruchstelle)

Aus dem in Beispiel 2 beschriebenen Sandwichelement wurden 5 Proben mit einer jeweiligen Länge von 240 mm und einer Breite von 60 mm entnommen. Die Orientierung der Wellenwabe war quer zur Probenlänge, das Delaminierungsmittel befand sich in der Mitte der Probe. Der Biegeversuch wurde gemäß DIN 53293 durchgeführt. Die Proben wurden so in die Prüfvorrichtung eingelegt, dass sich das Delaminierungsmittel auf der Zugseite der Proben befand. Als effektive Biegesteifigkeiten wurden 84,3·10⁶ Nmm², 76,1·10⁶ Nmm², 74,6·10⁶ Nmm², 79,2·10⁶ Nmm² und 72,3·10⁶ Nmm² (Mittelwert 77,3·10⁶ Nmm²) ermittelt. Die Kräfte bei Versagen betrugen 875,2 N, 864,8 N, 872,2 N, 849,1 N, und 867,7 N (Mittelwert 865,8 N).

Bei einer Anordnung des Delaminierungsmittels auf der Zugseite des Sandwichelementes veränderte sich die effektive Biegesteifigkeit mit und ohne Delaminierungsmittel im Rahmen der statistischen Streuung der Meßwerte nicht. Die zum Versagen der Proben führenden Kräfte lagen im Fall mit Delaminierungsmittel (Beispiel 4) nicht unter den Werten für den Fall ohne Delaminierungsmittel (Vergleichsbeispiel 3).

### Beispiel 5 (Druckversuch an Proben mit Sollbruchstelle)

Analog zu Beispiel 2 wurden Druckversuche mit dem gleichen Delaminierungsmittel (tesametal 4500), dieses Mal auf eine Breite von 35 mm zugeschnitten, durchgeführt. Die zum Versagen der Proben führenden Kräfte (Bruchlasten) betrugen 1838 N, 1654 N und 1735 N (Mittelwert 1742 N).

### Beispiel 6 (Druckversuch an Proben mit Sollbruchstelle)

Analog zu Beispiel 2 wurden Druckversuche mit einem anderen Delaminierungsmittel (Klebestreifen der Firma Beiersdorf AG, Marke tesa® Bezeichnung 4304; einseitig mit Klebstoff beschichteter Papiersteifen) durchgeführt. Das Delaminierungsmittel wurde auf eine Breite von 35 mm zugeschnitten. Die zum Versagen der Proben führenden Kräfte (Bruchlasten) betrugen 5146 N, 5374 N und 4712 N (Mittelwert 5077 N).

## Patentansprüche

1. Sandwichelement bestehend aus
a) einer Kernschicht aufgebaut aus mindestens einer Papierwabe und
b) zwei außenliegenden, fest mit der Kernschicht verbundenen Außenschichten, die jeweils aus mit Polyurethan getränkten Glasfasermatten aufgebaut sind,
c) gegebenenfalls Klebeschichten zwischen Kernschicht und außenliegenden Schichten,
**dadurch gekennzeichnet, dass** auf der Zugseite des Sandwichelementes ein Delaminierungsmittel aus der Gruppe bestehend aus Papier, Pappe, Kunststoff- und Blechfolien, gegebenenfalls mit einseitig klebenden Schichten versehen, mindestens über einem Teil der Fläche des Sandwichelementes angeordnet ist und das Delaminierungsmittel zwischen der auf der Zugseite befindlichen außenliegenden Schicht und der Kernschicht oder im ersten äußeren Drittel der Kernschicht auf der Zugseite des Sandwichelementes liegt.

2. Verwendung des Sandwichelementes gemäß Anspruch 1 im Automobilbereich als Dachmodul, Motorhaube, Heckklappenmodul, Türmodul, Bodenplattenmodul, Ladeboden, Hutablage oder Innenverkleidungsteil.

## Claims

1. A sandwich element consisting of
a) a core layer constructed from at least one paper honeycomb and
b) two exterior outer layers, firmly connected to the core layer, which are each constructed from glass-fibre mats impregnated with polyurethane,
c) optionally, adhesive layers between the core layer and the exterior layers,
**characterised in that** on the tension side of the sandwich element a delamination means from the group consisting of paper, cardboard, plastic foils and sheet-metal foils, optionally provided with layers that are adhesive on one side, is arranged at least over a part of the surface of the sandwich element, and the delamination means is situated between the exterior layer located on the tension side and the core layer or in the first outer third of the core layer on the tension side of the sandwich element.

2. Use of the sandwich element according to Claim 1 in the automotive field as roof module, bonnet, tailgate module, door module, floor-panel module, load floor, rear parcel shelf or interior-trim component.

## Revendications

1. Élément sandwich consistant en
a) une couche centrale se composant d'au moins un nid d'abeilles en papier et de
b) deux couches externes, jointes fermement à la couche centrale, qui sont constituées chacune de mats en fibre de verre imprégnés de polyuréthane,
c) le cas échéant, de couches adhésives entre la couche centrale et les couches externes,
**caractérisé en ce que** du côté tirant de l'élément sandwich, un élément de décollement interlaminaire appartenant au groupe constitué du papier, du carton, des feuilles de plastique et des feuilles de tôle, pourvu le cas échéant de couches adhésives sur une face, est aménagé au moins sur une partie de la surface de l'élément sandwich, et que ledit agent de décollement interlaminaire est disposé entre la couche externe se trouvant du côté tirant et la couche centrale, ou dans le premier tiers externe de la couche centrale du côté tirant de l'élément sandwich.

2. Utilisation de l'élément sandwich selon la revendication 1, dans le secteur automobile comme module de toit, de capot, de hayon, de portière, de plancher, de plate-forme de chargement, de plage arrière ou d'élément d'habillage intérieur.
